# EUROPEAN PATENT SPECIFICATION

(11) **EP 4 321 688 B1**
(45) Date of publication and mention of the grant of the patent: **23.09.2026**
(21) Application number: 23189493.2
(22) Date of filing: 03.08.2023
(51) Int. Cl.: E02B 17/02, B63B 27/30, B63B 35/00, E02B 17/04, E02D 27/52, E02B 17/00

(54) **A METHOD FOR BUILDING AN OFFSHORE OIL, GAS OR WIND FARM PLATFORM**
VERFAHREN ZUM BAU EINER OFFSHORE-ÖL-, -GAS- ODER WINDPARKPLATTFORM
PROCÉDÉ DE CONSTRUCTION D'UNE PLATEFORME DE PRODUCTION DE PÉTROLE, DE GAZ OU D'ÉOLIENNES EN MER

(30) Priority: 11.08.2022 NL 2032730
(43) Date of publication of application: 14.02.2024
(73) Proprietor: Iv-Groep B.V., 3351 LD Papendrecht (NL)
(72) Inventor: VAN KERCHOVE, Petrus, 3328 KC DORDRECHT (NL)
(74) Representative: Dogio Patents B.V.

(56) References cited:
- EP-A2- 0 039 590
- CN-A- 113 357 093
- GB-A- 2 314 576

## Description

The present invention relates to a method for building an offshore oil, gas or wind farm platform, wherein:
at a first location a topside for said oil, gas or windmill farm platform is fastened on a ship or barge by means of first grillage,
whereby the topside is at first height relative to the waterline;
said ship or barge sails to a second location where said topside is unfastened, raised, and fastened on a ship or barge by means of a second grillage, whereby the topside is at second height relative to the waterline, wherein the second height is higher than the first height;
said ship or barge sails to a third location where said topside is placed on top of a jacket of said oil, gas or wind farm platform.

For the Suez Canal there are specific requirement that are given in "The Suez Canal Rules of Navigation" which restricts the size of ships in sense of tonnage, draft, width, height, etc.. The maximum head room limitation results from the Suez Canal Bridge, a road bridge crossing the Suez Canal at El-Qantara. The clearance under the bridge is 70 metres. Therefore, the maximum height of ships that can pass through the Suez Canal is 68 metres above the waterline. The current channel depth of the canal allows for a maximum of 20.1 metres of draft. The maximum beam (width) is 77.5 m, whereas the wetted surface cross sectional area of the ship is currently limited by 1006 m².

Similar limitations apply to the Panama Canal ("Panamax": height 57.91 m, draft 12.04 m, beam 32.31 m), and the St. Lawrence Seaway ("Seawaymax": height 35.4 m, draft 8.1 m, beam 24 m).

There is a desire to ship large constructions through these canals, in order to avoid longer or rougher alternate routes (such as via Cape of Good Hope) or to avoid shipping the construction in smaller parts. In particular there is a desire to be able to ship topsides of offshore oil, gas or wind farm platforms through the Suez Canal from Asia to the North Sea, where the topsides have to be placed on a platform base or jacket. The topsides may have a height of for instance 60 m, a length of for instance 95 m, and a width of for instance 75 m. The platform bases or jackets have a certain height above the waterline, for instance between 15 and 20 m, depending on tide. The topsides have to be shipped to the base or jacket at approximately the required height, so that it can be lowered on top of the base or jacket, and the ship can leave thereafter. Therefore, with the above dimensions, the total height above the waterline during transport to the base or jacket is between 75 and 80 m. This means that the ship cannot sail through the Suez Canal with the topside at the required height.

The current practice is, that the topside is shipped from Asia with the bottom of the topside in a low position close to the waterline, through the Suez Canal to a sea port on the North Sea, where the topside is unloaded ashore, and then later the topside is loaded onto a ship in the required raised position for transport from the sea port to the base or jacket in the North Sea.

This method is time consuming, and often leads to long delays of many months, because the time frame for shipment and placing the topsides is often restricted to spring and summer, due to rough weather and sea conditions which may damage the fragile equipment in the topside.

The invention aims at providing a quicker and less costly method.

To this end, a method according to the preamble is characterized in that said second location is provided with a lifting device;
wherein said lifting device comprises at least four lifting units;
wherein said lifting units comprise a support structure which is supported by or in the bottom of the sea or a harbour, and a lifting pile having a top end which forms a support point for supporting the topside,
wherein, seen from above, each one of said supporting points is located on a respective corner of a rectangle;
wherein, seen in a first horizontal direction, a free horizontal space is provided having a width W1 between said lifting units;
wherein the ship or barge has a width W which is smaller than the width W1;

wherein the ship or barge with the topside moves between said lifting units;
wherein said topside is placed on the support points of the lifting piles and the first grillage is unfastened from the ship;
wherein said lifting piles with the topside are moved in vertical direction to a higher position by means of actuators; and the topside is fastened to the ship or barge by means of a second grillage whereby the topside is at said second height relative to the waterline.

GB-A-2314576 discloses a method for building an offshore platform assembly, wherein legs provided with lifting means are upstanding from a base to support a platform deck; the method comprising the steps of setting the base on the seabed, moving the deck to a position over the lifting means, and the lifting means raising the deck to a required position fixing the deck to the legs in that position.

According to an alternative embodiment, seen from above, said topside has a substantially rectangular shape with a greater length than width, and the topside is loaded on said ship or barge by means of said first grillage with its length in the direction of sailing;
wherein in the lifting device, seen in a second horizontal direction which is perpendicular to the first horizontal direction, a second free horizontal space is provided having a width W2 between said lifting units which is larger than the width W;
wherein, after the lifting piles with the topside are moved in vertical direction to higher position, the ship or barge moves between said lifting units in said second direction, and the topside is fastened to the ship or barge by means of the second grillage with its length perpendicular to the direction of sailing.

Preferably, the second grillage is put under and fastened to the first grillage for fastening the topside to the ship or barge at said second height.

Preferably, W1 is substantially equal to W2.

Preferably, said lifting device comprises four pairs of said lifting units, wherein the support points of first ones of each pair of lifting units are located on respective corners of a square, and the support points of the other ones of each pair of lifting units are located on respective corners of a rectangle which forms an extension of said square at two sides.

Preferably, said support structure of each lifting unit comprises multiple piles, which are piled into the seabed.

Preferably, said piles rise up from the seabed at an angle with the vertical axis of the lifting unit and towards said vertical axis.

Preferably, at the top of the piles a frame is mounted to the piles.

Preferably, the frame comprises a sleeve which surrounds the vertical axis, in which the lifting pile is mounted.

Preferably, said actuator of each lifting unit comprises one or more strand jacks.

Preferably, said actuators are synchronized, so that the lifting piles move up or down in sync.

The present invention will now be illustrated with reference to the drawing where
Fig. 1 is a perspective view of a lifting device;
Fig. 2A is a cross section of a lifting unit of the lifting device in a lowered position;
Fig. 2B is a front view of a lifting unit of the lifting device in a raised position;
Fig. 3 is a perspective view of a ship with a topside at a lifting device in a first embodiment;
Figs 4A - 4D are front views of a ship with a topside at different stages of a lifting action using the lifting device in the first embodiment;
Fig. 5 is a perspective view of a ship with a topside at a lifting device in a second embodiment;
Figs 6A - 6D are front views of a ship with a topside at different stages of a lifting action using the lifting device in the second embodiment; and
Figs 7A - 7C are perspective views of a ship with a topside at a jacket at different stages of placing the topside on the jacket.

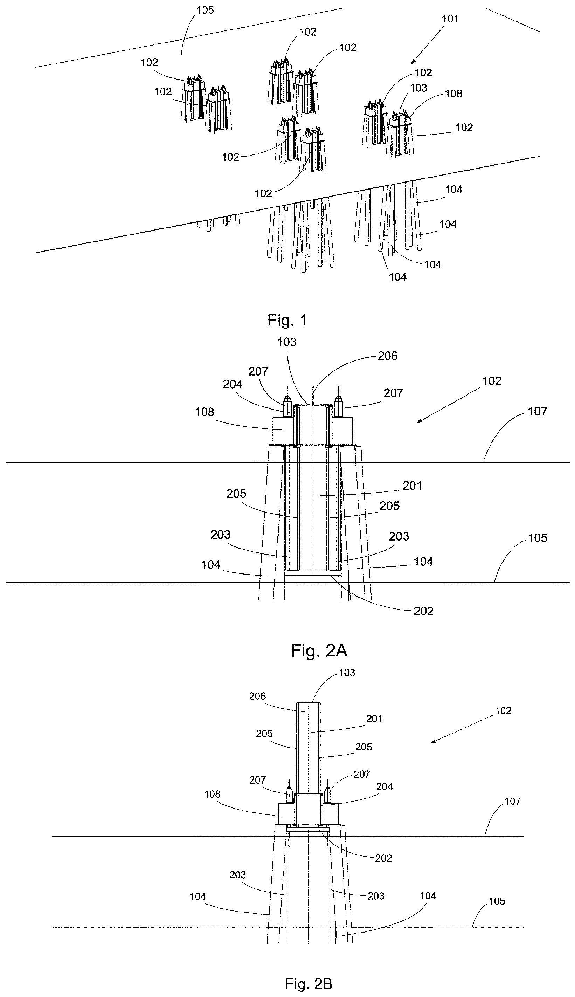

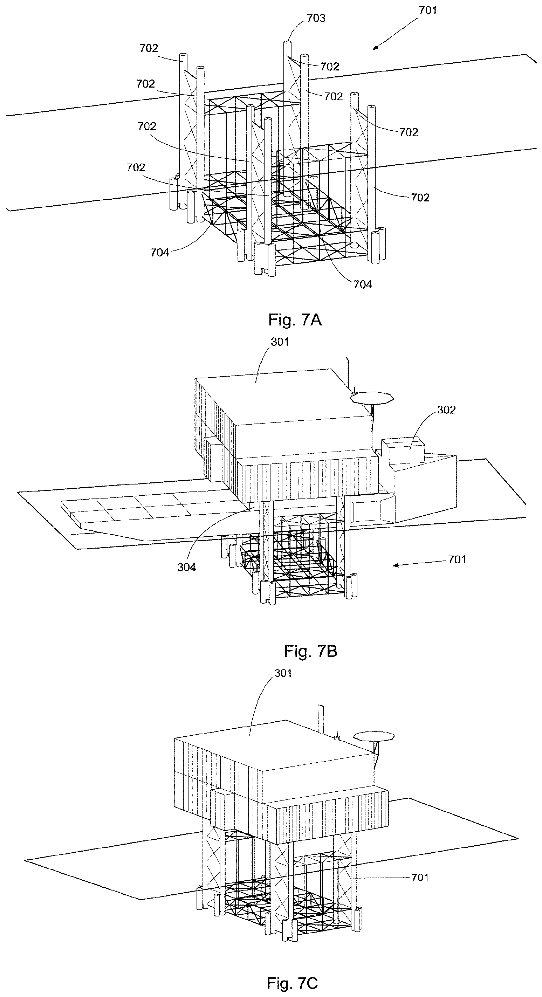

According to figure 1 a lifting device 101 comprises a plurality of lifting units 102 each having a support point 103. The number, mutual orientation and horizontal distances of the support points 103 correspond to the number, mutual orientation and horizontal distances of the support points 703 of the jacket 701 as shown in figure 7A, which further correspond to the number, mutual orientation and horizontal distances of the support points at the bottom of a topside 301 to be placed on top of the jacket 701.

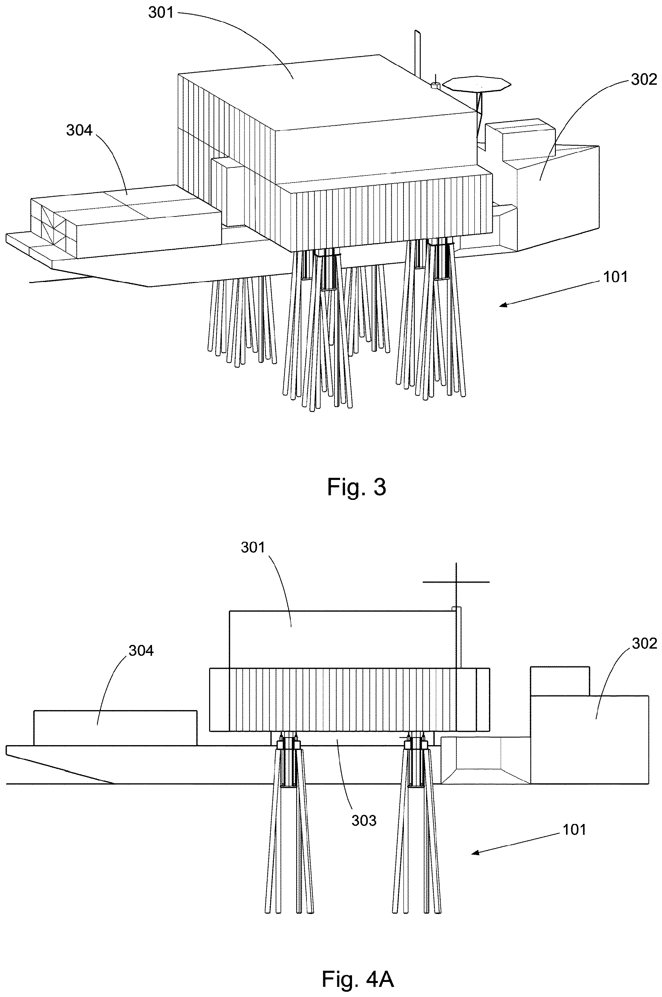

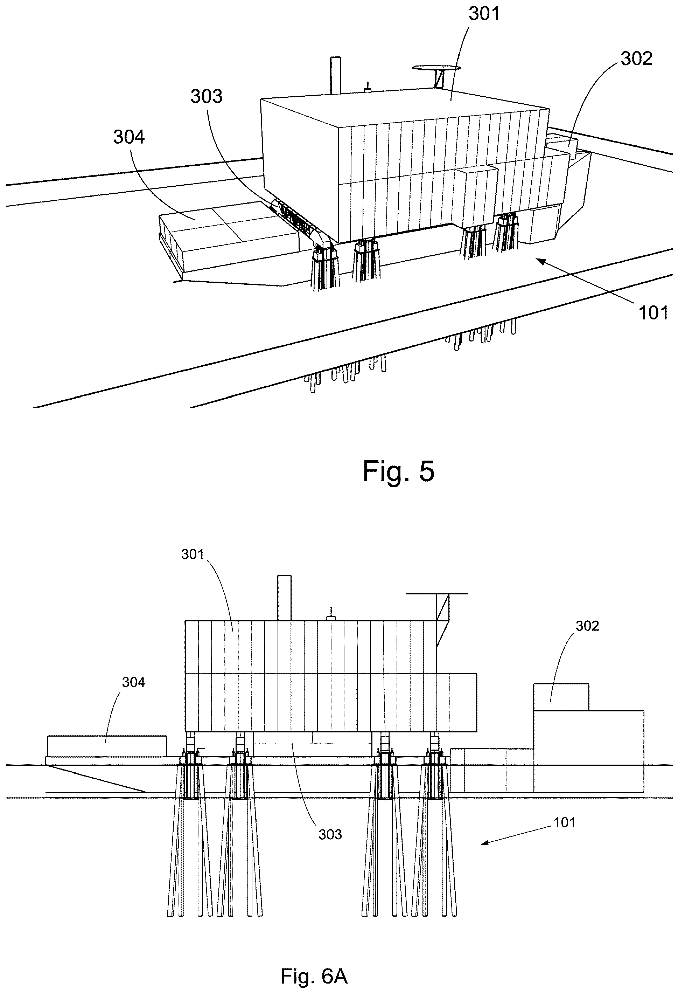

In the embodiment as shown in the figures, the support points are configured in 4 pairs, wherein each pair of support points 103, 703 is located near a corner of a rectangle. In at least one direction the free horizontal space between the pairs of support points 103, 703 and their underlying supporting structures has a width W1 which is sufficient for a barge or ship 302 having a width W which is smaller than W1, and which is able to carry the topside 301, to move between them, as shown in figures 3 and 7B. Preferably also in the direction perpendicular to the mentioned at least one direction the free horizontal space between the pairs of support points 103, 703 and the underlying supporting structure formed by the piles 104 has a width W2 which is sufficient for a barge or ship 302 having a width W which is smaller than then W2 to move between them, as shown in figure 5. In the embodiment as shown in the figures, first ones of the support points 103, 703 of each pair of support points 103, 703 are located on the corner of a square, so that the widths W1, W2 of the free room between them in both mentioned directions is the same, and the second (optional) ones of the support points 103, 703 of each pair of support points 103, 703 are located on the corners of a rectangle which forms an extension of said square at two sides.

Each lifting unit 102 comprises 4 piles 104 which are piled into the seabed 105 and rise up from the seabed at an angle with the vertical axis 206 of the lifting units 102 and towards said vertical axis 206. At the top of the piles 104, above the water level 107, a frame 108 is mounted to the piles 104.

The frame 108 comprises a sleeve 204 which surrounds the vertical axis 206, in which a lifting pile 201 is mounted. The lifting pile 201 is guided in the top and bottom of this sleeve 204. The top end of each lifting pile 201 forms a support point 103. On top of the lifting frame 108 a series of strand jacks 207 is placed which are connected by means of strands to the bottom end of each lifting pile 201 to move the lifting piles 201 up and down. The strand jacks 207 are synchronized, so that the lifting piles 201 move up or down in sync.

Figures 3 and 4A - 4D show a first embodiment of a method for lifting a topside 301 from a ship 302 by means of the lifting device 101.

Example dimensions: the ship 302 has a width of 50 m, and the topside 301 has a length of 75 m, a width of 55 m and a maximum height of 60 m.

The ship 302 is loaded and fastened with the topside 301 by means of an upper grillage 303, for instance when it sails from Asia to Europe through the Suez Canal. During this transport the topside 301 is loaded with its length in the lateral direction of the ship 302, so that it substantially extends from the ship 302 at both sides. The length of the topside 301 fits within the beam (width) of 77.5 m of the Suez Canal. The upper grillage 303 has a height such that the largest height of the topside 301 above the water level does not exceed 68 m.

The lifting device 101 is located for instance in the North Sea, near or in a port such as Rotterdam. Once the ship arrives at the lifting device 101, the ship 302 moves into the above mentioned free horizontal space in the first direction between the pairs of support points 103, as shown in figures 3 and 4A, such that the support points 103 are aligned with the support points of the topside 301. The upper grillage 303 is then unfastened from the ship 302.

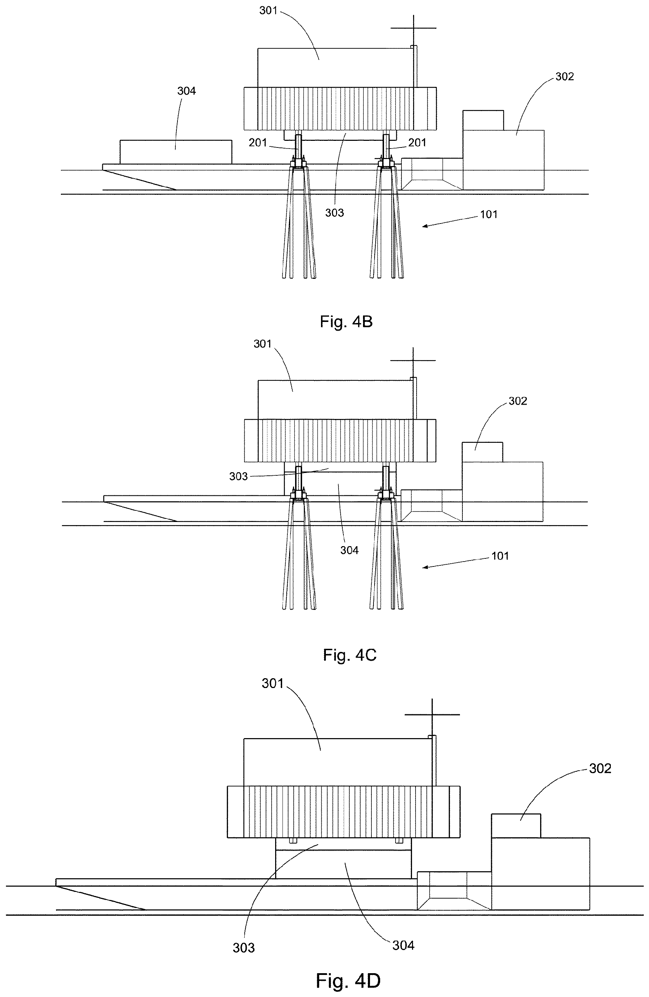

The topside 301 is then lifted upward by means of the lifting piles 201, up to a height which is higher than the required height for placing the topside 301 on the jacket 701, as shown in figure 4B.

A lower grillage 304, which was stored on the same deck of the ship 302 as the upper grillage 303 and the topside 301, is then pushed under the upper grillage 303, as shown in figure 4C and the upper grillage 303 with the topside 301 is lowered onto and fastened to the lower grillage 304. The lower grillage is then fastened to the ship 302.

The ship 302 can then sail away from the lifting device 101 with the topside 301 at the required height, as shown in figure 4D.

Figures 5 and 6A - 6D show a second embodiment of a method for lifting a topside 301 on a ship 302 by means of the lifting device 101.

Example dimensions: the ship 302 has a width of 50 m, and the topside 301 has a length of 95 m, a width of 75 m and a maximum height of 60 m.

The ship 302 is loaded and fastened with the topside 301 by means of an upper grillage 303, for instance when it sails from Asia to Europe through the Suez Canal. The length of the topside 301 does not fit within the beam (width) of 77.5 m of the Suez Canal, and therefore during this transport the topside 301 is loaded with its length in the sailing direction of the ship 302, so that the width of the topside 301 extends from the ship 302 at both sides but still fits within the beam of 77.5 m. The upper grillage 303 has a height such that the largest height of the topside 301 above the water level does not exceed 68 m (Suezmax).

The lifting device 101 is located for instance in the North Sea, near or in a port such as Rotterdam. Once it arrives at the lifting device 101, the ship 302 moves into the above mentioned free horizontal space in the second direction between the pairs of support points 103, as shown in figures 5 and 6A, such that the support points 103 are aligned with the support points of the topside 301. The upper grillage 303 is then unfastened from the ship 302.

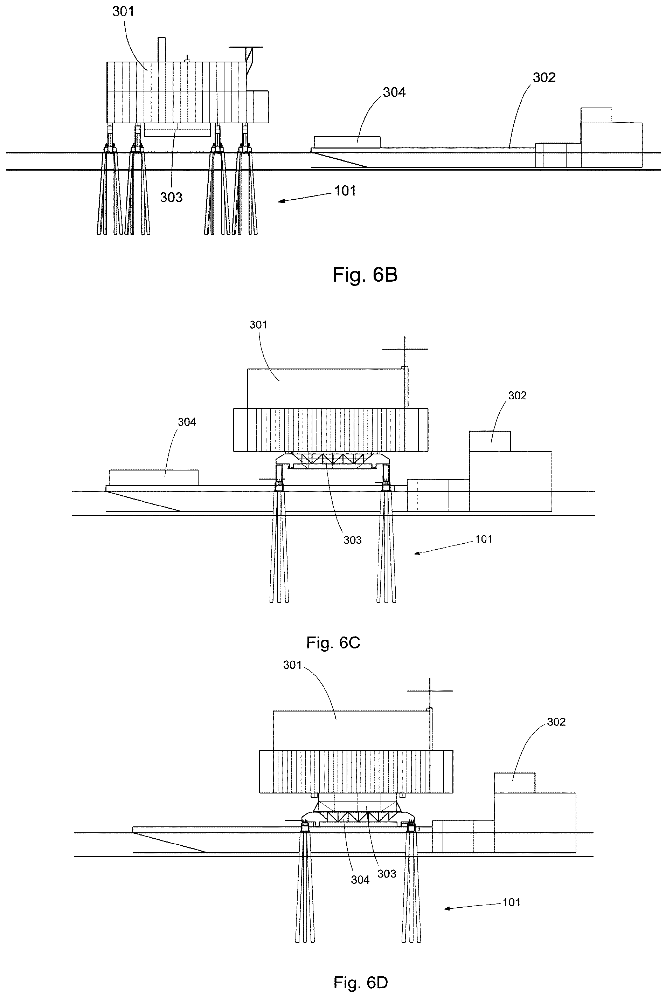

The topside 301 is then lifted upward by means of the lifting piles 201, up to a height which is higher than the required height for placing the topside 301 on the jacket 701, as shown in figure 6B, and the ship then moves backwards out of the space between the support points.

The ship 302 moves into the above mentioned free horizontal space in the other (first) direction between the pairs of support points 103, as shown in figure 6C.

A lower grillage 304, which was stored on the same deck of the ship 302 as the upper grillage 303 and the topside 301, is then pushed under the upper grillage 303 and the upper grillage 303 with the topside 301 is lowered onto and fastened to the lower grillage 304, as shown in figure 6D. The lower grillage is then fastened to the ship 302.

The ship 302 can then sail away from the lifting device 101 with the topside 301 at the required height.

Figure 7A shows the (conventional) jacket 701, with supporting legs 702 having support points 703, and a lace framework 704 for fixating the supporting legs 702. Figure 7B shows the ship 302 moving the topside 301 onto the jacket in a conventional manner, and figure 7C shows the jacket 701 with the topside 301 installed thereon, after the upper grillage 303 has been unfastened from the topside 301 and the ship 302 with the grillages 303, 304 has moved away.

The invention has thus been described by means of preferred embodiments. It is to be understood, however, that this disclosure is merely illustrative. Various details of the structure and function were presented, but changes made therein, to the full extent extended by the general meaning of the terms in which the appended claims are expressed, are understood to be within the principle of the present invention. The description and drawings shall be used to interpret the claims. The claims should not be interpreted as meaning that the extent of the protection sought is to be understood as that defined by the strict, literal meaning of the wording used in the claims, the description and drawings being employed only for the purpose of resolving an ambiguity found in the claims. For the purpose of determining the extent of protection sought by the claims, due account shall be taken of any element which is equivalent to an element specified therein. An element is to be considered equivalent to an element specified in the claims at least if said element performs substantially the same function in substantially the same way to yield substantially the same result as the element specified in the claims.

## Claims

1. A method for building an offshore oil, gas or wind farm platform, wherein:
at a first location a topside (301) for said oil, gas or windmill farm platform is fastened on a ship or barge (302) by means of first grillage (303), whereby the topside (301) is at first height relative to the waterline (107);
**characterized in that**
said ship or barge (302) sails to a second location where said topside (301) is unfastened, raised, and fastened on a ship or barge by means of a second grillage (304), whereby the topside (301) is at second height relative to the waterline (107), wherein the second height is higher than the first height;
said ship or barge (302) sails to a third location where said topside (301) is placed on top of a jacket (701) of said oil, gas or wind farm platform;
wherein
said second location is provided with a lifting device (101);
wherein said lifting device (101)comprises at least four lifting units (102);
wherein said lifting units (102) comprise a support structure which is supported by or in the bottom (105) of the sea or a harbour, and a lifting pile (206) having a top end which forms a support point (103) for supporting the topside (301), wherein, seen from above, each one of said supporting points (103) is located on a respective corner of a rectangle;
wherein, seen in a first horizontal direction, a free horizontal space is provided having a width W1 between said lifting units (102);
wherein the ship or barge (302) has a width W which is smaller than the width W1;
wherein the ship or barge (302) with the topside (301) moves between said lifting units (102);
wherein said topside (301) is placed on the support points (103) of the lifting piles (201) and the first grillage (303) is unfastened from the ship or barge (302);
wherein said lifting piles (201) with the topside (301) are moved in vertical direction to a higher position by means of actuators (207); and
the topside (301) is fastened to the ship or barge (302) by means of a second grillage (304) whereby the topside (301) is at said second height relative to the waterline (107).

2. The method according to claim 1, wherein seen from above, said topside (301) has a substantially rectangular shape with a greater length than width, and the topside (301) is loaded on said ship or barge (302) by means of said first grillage (303) with its length in the direction of sailing;
wherein in the lifting device (101), seen in a second horizontal direction which is perpendicular to the first horizontal direction, a second free horizontal space is provided having a width W2 between said lifting units (102) which is larger than the width W;
wherein, after the lifting piles (201) with the topside (301) are moved in vertical direction to higher position, the ship or barge (302) moves between said lifting units (102) in said second direction, and the topside (301) is fastened to the ship or barge (302) by means of the second grillage (304) with its length perpendicular to the direction of sailing.

3. The method according to claim 1 or 2, wherein the second grillage (304) is put under and fastened to the first grillage (303) for fastening the topside (301) to the ship or barge (302) at said second height.

4. The method according to claim 2, wherein W1 is substantially equal to W2.

5. The method according to any of the claims 1 to 4, wherein said lifting device (101) comprises four pairs of said lifting units (102), wherein the support points (103) of first ones of each pair of lifting units (102) are located on respective corners of a square, and the support points of the other ones of each pair of lifting units (102) are located on respective corners of a rectangle which forms an extension of said square at two sides.

6. The method according to any of the claims 1 to 5, wherein said support structure of each lifting unit (102) comprises multiple piles (104), which are piled into the seabed (105).

7. The method according to claim 6, wherein said piles (104) rise up from the seabed (105) at an angle with the vertical axis of the lifting unit (102) and towards said vertical axis.

8. The method according to any of the claims 6 or 7, wherein at the top of the piles (104) a frame (108) is mounted to the piles (104).

9. The method according to claim 8, wherein the frame (108) comprises a sleeve (204) which surrounds the vertical axis, in which the lifting pile (201) is mounted.

10. The method according to any of the claims 1 to 9, wherein said actuator (207) of each lifting unit (102) comprises one or more strand jacks (207).

11. The method according to any of the claims 1 to 10, wherein said actuators (207) are synchronized, so that the lifting piles (201) move up or down in sync.

## Patentansprüche

1. Verfahren zum Bau einer Offshore-Öl-, -Gas- oder Windparkplattform, wobei:
an einem ersten Standort eine Oberseite (301) für die Öl-, Gas- oder Windmühlenparkplattform mittels eines ersten Trägerrosts (303) auf einem Schiff oder Lastkahn (302) befestigt wird, wobei sich die Oberseite (301) in einer ersten Höhe relativ zu der Wasserlinie (107) befindet;
**dadurch gekennzeichnet, dass**
das Schiff oder der Lastkahn (302) zu einem zweiten Standort fährt, bei dem die Oberseite (301) gelöst, angehoben und mittels eines zweiten Trägerrosts (304) auf einem Schiff oder einem Lastkahn befestigt wird, wobei sich die Oberseite (301) in einer zweiten Höhe relativ zu der Wasserlinie (107) befindet, wobei die zweite Höhe höher als die erste Höhe ist;
das Schiff oder der Lastkahn (302) zu einem dritten Standort fährt, bei dem die Oberseite (301) auf einem Jacket (701) der Öl-, Gas- oder Windparkplattform platziert wird;
wobei der zweite Standort mit einer Hebevorrichtung (101) versehen ist;
wobei die Hebevorrichtung (101) mindestens vier Hebeeinheiten (102) umfasst;
wobei die Hebeeinheiten (102) eine Stützstruktur, die von oder im Boden (105) des Meeres oder eines Hafens gestützt wird, und einen Hebepfahl (206) mit einem oberen Ende, das einen Stützpunkt (103) zum Stützen der Oberseite (301) bildet, umfassen,
wobei sich, von oben gesehen, jeder der Stützpunkte (103) an einer jeweiligen Ecke eines Rechtecks befindet;
wobei, in einer ersten horizontalen Richtung gesehen, ein freier horizontaler Raum mit einer Breite W1 zwischen den Hebeeinheiten (102) bereitgestellt ist;
wobei das Schiff oder der Lastkahn (302) eine Breite W aufweist, die kleiner als die Breite W1 ist;
wobei sich das Schiff oder der Lastkahn (302) mit der Oberseite (301) zwischen den Hebeeinheiten (102) bewegt;
wobei die Oberseite (301) auf den Stützpunkten (103) der Hebepfähle (201) platziert wird und der erste Trägerrost (303) von dem Schiff oder dem Lastkahn (302) gelöst wird;
wobei die Hebepfähle (201) mit der Oberseite (301) mittels Aktoren (207) in vertikaler Richtung in eine höhere Position bewegt werden; und
die Oberseite (301) mittels eines zweiten Trägerrosts (304) an dem Schiff oder dem Lastkahn (302) befestigt wird, wobei sich die Oberseite (301) in der zweiten Höhe relativ zu der Wasserlinie (107) befindet.

2. Verfahren nach Anspruch 1, wobei, von oben gesehen, die Oberseite (301) eine im Wesentlichen rechteckige Form mit einer größeren Länge als Breite aufweist und die Oberseite (301) mittels des ersten Trägerrosts (303) mit seiner Länge in der Fahrtrichtung auf das Schiff oder den Lastkahn (302) geladen wird;
wobei in der Hebevorrichtung (101), in einer zweiten horizontalen Richtung gesehen, die senkrecht zu der ersten horizontalen Richtung ist, ein zweiter freier horizontaler Raum mit einer Breite W2 zwischen den Hebeeinheiten (102), die größer als die Breite W ist, bereitgestellt ist;
wobei sich das Schiff oder der Lastkahn (302), nach dem Bewegen der Hebepfähle (201) mit der Oberseite (301) in vertikaler Richtung in eine höhere Position, zwischen den Hebeeinheiten (102) in der zweiten Richtung bewegt und die Oberseite (301) mittels des zweiten Trägerrosts (304) mit seiner Länge senkrecht zu der Fahrtrichtung an dem Schiff oder dem Lastkahn (302) befestigt wird.

3. Verfahren nach Anspruch 1 oder 2, wobei der zweite Trägerrost (304) unter den ersten Trägerrost (303) gelegt und daran befestigt wird, um die Oberseite (301) an dem Schiff oder dem Lastkahn (302) in der zweiten Höhe zu befestigen.

4. Verfahren nach Anspruch 2, wobei W1 im Wesentlichen gleich W2 ist.

5. Verfahren nach einem der Ansprüche 1 bis 4, wobei die Hebevorrichtung (101) vier Paare der Hebeeinheiten (102) umfasst, wobei sich die Stützpunkte (103) von ersten von jedem Paar von Hebeeinheiten (102) an jeweiligen Ecken eines Quadrats befinden und sich die Stützpunkte der anderen von jedem Paar von Hebeeinheiten (102) an jeweiligen Ecken eines Rechtecks befinden, das eine Verlängerung des Quadrats an zwei Seiten bildet.

6. Verfahren nach einem der Ansprüche 1 bis 5, wobei die Stützstruktur jeder Hebeeinheit (102) mehrere Pfähle (104) umfasst, die in den Meeresboden (105) eingerammt sind.

7. Verfahren nach Anspruch 6, wobei sich die Pfähle (104) von dem Meeresboden (105) in einem Winkel zu der vertikalen Achse der Hebeeinheit (102) und in Richtung der vertikalen Achse erheben.

8. Verfahren nach einem der Ansprüche 6 oder 7, wobei an der Spitze der Pfähle (104) ein Rahmen (108) an den Pfählen (104) montiert ist.

9. Verfahren nach Anspruch 8, wobei der Rahmen (108) eine Hülse (204) umfasst, die die vertikale Achse umgibt, in der der Hebepfahl (201) montiert ist.

10. Verfahren nach einem der Ansprüche 1 bis 9, wobei der Aktor (207) jeder Hebeeinheit (102) einen oder mehrere Strangheber (207) umfasst.

11. Verfahren nach einem der Ansprüche 1 bis 10, wobei die Aktoren (207) synchronisiert sind, so dass sich die Hebepfähle (201) synchron nach oben oder unten bewegen.

## Revendications

1. Procédé permettant la construction d'une plateforme de parc pétrolier, gazier ou éolien en mer, dans lequel :
à un premier emplacement, une face supérieure (301) pour ladite plateforme de parc pétrolier, gazier ou éolien est fixée sur un navire ou une barge (302) au moyen d'un premier grillage (303), moyennant quoi la face supérieure (301) est à une première hauteur par rapport à la ligne de flottaison (107) ;
**caractérisé en ce que**
ledit navire ou ladite barge (302) navigue vers un deuxième emplacement où ladite face supérieure (301) est détachée, relevée et fixée sur un navire ou une barge au moyen d'un second grillage (304), moyennant quoi la face supérieure (301) est à une seconde hauteur par rapport à la ligne de flottaison (107), dans lequel la seconde hauteur est plus haute que la première hauteur ;
ledit navire ou ladite barge (302) navigue vers un troisième emplacement où ladite face supérieure (301) est placée sur une chemise (701) de ladite plateforme de parc pétrolier, gazier ou éolien ;
dans lequel ledit deuxième emplacement est pourvu d'un dispositif de levage (101) ;
dans lequel ledit dispositif de levage (101) comprend au moins quatre unités de levage (102) ;
dans lequel lesdites unités de levage (102) comprennent une structure de support qui est supportée par le fond (105) de la mer ou d'un port ou dans ceux-ci, et un pieu de levage (206) présentant une extrémité supérieure qui forme un point de support (103) destiné à supporter la face supérieure (301),
dans lequel, vu de dessus, chacun desdits points de support (103) est situé sur un coin respectif d'un rectangle ;
dans lequel, vu dans une première direction horizontale, un espace horizontal libre est prévu présentant une largeur W1 entre lesdites unités de levage (102) ;
dans lequel le navire ou la barge (302) présente une largeur W qui est inférieure à la largeur W1 ;
dans lequel le navire ou la barge (302) avec la face supérieure (301) se déplace entre lesdites unités de levage (102) ;
dans lequel ladite face supérieure (301) est placée sur les points de support (103) des pieux de levage (201) et le premier grillage (303) est détaché du navire ou de la barge (302) ;
dans lequel lesdits pieux de levage (201) avec la face supérieure (301) sont déplacés dans la direction verticale vers une position supérieure au moyen d'actionneurs (207) ; et
la face supérieure (301) est fixée au navire ou à la barge (302) au moyen d'un second grillage (304), moyennant quoi la face supérieure (301) est à ladite seconde hauteur par rapport à la ligne de flottaison (107).

2. Procédé selon la revendication 1, dans lequel, vu de dessus, ladite face supérieure (301) présente une forme sensiblement rectangulaire avec une longueur plus grande que la largeur, et la face supérieure (301) est chargée sur ledit navire ou ladite barge (302) au moyen dudit premier grillage (303) avec sa longueur dans la direction de navigation ;
dans lequel dans le dispositif de levage (101), vu dans une seconde direction horizontale qui est perpendiculaire à la première direction horizontale, un second espace horizontal libre est prévu présentant une largeur W2 entre lesdites unités de levage (102) qui est plus large que la largeur W ;
dans lequel, après que les pieux de levage (201) avec la face supérieure (301) sont déplacés dans la direction verticale vers une position plus haute, le navire ou la barge (302) se déplace entre lesdites unités de levage (102) dans ladite seconde direction, et la face supérieure (301) est fixée au navire ou à la barge (302) au moyen du second grillage (304) avec sa longueur perpendiculaire à la direction de navigation.

3. Procédé selon la revendication 1 ou 2, dans lequel le second grillage (304) est placé sous le premier grillage (303) et fixé à celui-ci pour fixer la face supérieure (301) au navire ou à la barge (302) à ladite seconde hauteur.

4. Procédé selon la revendication 2, dans lequel W1 est sensiblement égale à W2.

5. Procédé selon l'une quelconque des revendications 1 à 4, dans lequel ledit dispositif de levage (101) comprend quatre paires desdites unités de levage (102), dans lequel les points de support (103) des premières unités de chaque paire d'unités de levage (102) sont situés sur des coins respectifs d'un carré, et les points de support des autres unités de chaque paire d'unités de levage (102) sont situés sur des coins respectifs d'un rectangle qui forme une extension dudit carré de deux côtés.

6. Procédé selon l'une quelconque des revendications 1 à 5, dans lequel la structure de support de chaque unité de levage (102) comprend de multiples pieux (104), qui sont plantés dans le fond marin (105).

7. Procédé selon la revendication 6, dans lequel lesdits pieux (104) s'élèvent à partir du fond marin (105) selon un angle avec l'axe vertical de l'unité de levage (102) et vers ledit axe vertical.

8. Procédé selon l'une quelconque des revendications 6 ou 7, dans lequel, au sommet des pieux (104), un cadre (108) est monté sur les pieux (104).

9. Procédé selon la revendication 8, dans lequel le cadre (108) comprend un manchon (204) qui entoure l'axe vertical, où le pieu de levage (201) est monté.

10. Procédé selon l'une quelconque des revendications 1 à 9, dans lequel ledit actionneur (207) de chaque unité de levage (102) comprend un ou plusieurs vérins à toron (207).

11. Procédé selon l'une quelconque des revendications 1 à 10, dans lequel lesdits actionneurs (207) sont synchronisés, afin que les pieux de levage (201) se déplacent vers le haut ou vers le bas en synchronisation.
